(19) Europäisches Patentamt / European Patent Office / Office européen des brevets

(11) **EP 3 464 005 B1**

(12) **EUROPÄISCHE PATENTSCHRIFT**

(45) Veröffentlichungstag und Bekanntmachung des Hinweises auf die Patenterteilung:
**30.11.2022   Patentblatt 2022/48**

(21) Anmeldenummer: **17723075.2**

(22) Anmeldetag: **11.05.2017**

(51) Internationale Patentklassifikation (IPC):
**B60W 40/068** (2012.01)   **B60W 50/00** (2006.01)
**G06N 7/00** (2006.01)

(52) Gemeinsame Patentklassifikation (CPC):
**B60W 40/068; B60W 50/0097; G06N 7/005;**
B60W 2050/0051; B60W 2420/42; B60W 2420/52;
B60W 2520/10; B60W 2520/105; B60W 2520/125;
B60W 2520/14; B60W 2520/26; B60W 2520/28;
B60W 2530/20; B60W 2540/30; B60W 2552/15;

(Forts.)

(86) Internationale Anmeldenummer:
**PCT/EP2017/061264**

(87) Internationale Veröffentlichungsnummer:
**WO 2017/211532 (14.12.2017 Gazette 2017/50)**

(54) **VERFAHREN ZUR SCHÄTZUNG EINER WAHRSCHEINLICHKEITSVERTEILUNG DES MAXIMALEN REIBWERTS AN EINEM AKTUELLEN UND/ODER ZUKÜNFTIGEN WEGPUNKT EINES FAHRZEUGS**

METHOD FOR ESTIMATING A PROBABILITY DISTRIBUTION OF THE MAXIMUM COEFFICIENT OF FRICTION AT A CURRENT AND/OR FUTURE WAYPOINT OF A VEHICLE

PROCÉDÉ D'ESTIMATION D'UNE DISTRIBUTION DE PROBABILITÉS DU COEFFICIENT DE FROTTEMENT MAXIMAL EN UN POINT DE PASSAGE ACTUEL ET/OU FUTUR D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2016   DE 102016209984**

(43) Veröffentlichungstag der Anmeldung:
**10.04.2019   Patentblatt 2019/15**

(73) Patentinhaber:
• **ZF Friedrichshafen AG**
  **88046 Friedrichshafen (DE)**
• **ZF Active Safety GmbH**
  **56070 Koblenz (DE)**

(72) Erfinder:
• **SCHLEGEL, Matthias**
  **89134 Blaustein (DE)**
• **ABHAU, Jochen**
  **6900 Bregenz (AT)**
• **GILSDORF, Heinz-Joachim**
  **97499 Donnersdorf (DE)**
• **KING, Julian**
  **6830 Rankweil (AT)**
• **KÖHLER, Jochen**
  **6850 Dornbirn (AT)**
• **KRIMMEL, Horst**
  **88069 Tettnang (DE)**
• **NIEDERBRUCKER, Gerhard**
  **88045 Friedrichshafen (DE)**
• **TURNER, Lara Ruth**
  **88090 Immenstaad (DE)**
• **WAGNER, Volker**
  **88213 Ravensburg (DE)**
• **ZDYCH, Robert**
  **88045 Friedrichshafen (DE)**
• **ADLER, Vanessa**
  **56179 Niederwerth (DE)**
• **HEINRICHS-BARTSCHER, Sascha**
  **56566 Neuwied (DE)**
• **RAFFAUF, Ralf**
  **56220 Urmitz (DE)**

• **SIMON, Holger**
  **65604 Elz (DE)**
• **STEIN, Walter**
  **56179 Niederwerth (DE)**

(74) Vertreter: **ZF Friedrichshafen AG**
     **Gewerblicher Rechtsschutz**
     **Löwentalerstraße 20**
     **88046 Friedrichshafen (DE)**

(56) Entgegenhaltungen:
     **DE-A1-102007 060 652     US-A1- 2010 250 086**

(52) Gemeinsame Patentklassifikation (CPC): (Forts.)
     B60W 2552/20; B60W 2552/30; B60W 2552/40;
     B60W 2555/20; B60W 2556/10; B60W 2556/50;
     B60W 2556/65

**Beschreibung**

Die Erfindung betrifft ein Verfahren und eine Vorrichtung zur Schätzung einer Wahrscheinlichkeitsverteilung des maximalen Reibwerts an einem aktuellen und/oder zumindest einem zukünftigen Wegpunkt eines fahrenden Fahrzeugs.

Die Erfassung oder Bestimmung des zwischen Reifen und Fahrbahn verfügbaren max. Reibwerts bzw. die Erfassung eines Fahrbahnzustands (z.B. trocken, nass, schneebedeckt und vereist), aus dem sich eine Reibwertgruppe ableiten lässt, ist eine wichtige Voraussetzung, um den Fahrer in seiner Fahraufgabe zu unterstützen und schwere Unfälle zu vermeiden. Allgemein obliegt die Einschätzung der Straßenverhältnisse dem Fahrer, der seine Fahrweise darauf ausrichten muss. Fahrzeugregelsysteme, wie ESC (Electronic Stability Control)/TCS (Traction Control System) oder ABS (Antiblockiersystem) helfen dem Fahrer das Fahrzeug im Grenzbereich zu stabilisieren, um so seiner Fahraufgabe in Extremsituationen leichter entsprechen zu können.

Die Unfallvermeidung (Aktive Sicherheit) gewinnt bei Fahrerassistenzsystemen zunehmend an Bedeutung. Deren Wirkung hängt jedoch entscheidend vom zur Verfügung stehenden max. Reibwert ab. Dieser wird vor allem durch das Zusammenspiel zwischen Reifen, Untergrund und Zwischenmedium bestimmt. Beispielsweise erniedrigen Nässe, Schnee und Eis den zur Verfügung stehenden max. Reibwert zwischen Reifen und Fahrbahn gegenüber dem auf einer trockenen Fahrbahn zur Verfügung stehenden max. Reibwert erheblich. Sich plötzlich ändernde Reibwerte, wie sie beispielsweise durch veränderte Umgebungsbedingungen zustande kommen, können zu instabilen Fahrsituationen führen und Unfälle verursachen. Besonders gefährlich wird es, wenn der Fahrer des Fahrzeugs aufgrund falscher Einschätzung des verfügbaren max. Reibwerts zu schnell auf eine Kurve zufährt. Bei Kenntnis des Reibwerts beziehungsweise eines wahrscheinlichen Reibwertintervalls kann das Fahrzeug bereits vor der Kurve soweit verzögert werden, dass diese problemlos durchfahren werden kann. Fahrerassistenzsysteme, die diesen Eingriff ermöglichen, benötigen hierzu jedoch Kenntnis über den max. Reibwert an einem zukünftigen Wegpunkt des Fahrzeugs. Auch für automatisiert fahrende Fahrzeuge ist die Kenntnis des max. Reibwerts an einem aktuellen Wegpunkt sowie einem zukünftigen Wegpunkt von Bedeutung, da diese Werte eine wichtige Größe zur Berechnung einer Fahrstrategie (insbesondere einer Geschwindigkeitstrajektorie) darstellen.

Der max. Reibwert kann durch direkte oder indirekte Methoden ermittelt werden. Die Ermittlung des Reibwerts durch direkte Methoden ist effektbasiert und kann in direkte, aktive und direkte, passive Methoden unterteilt werden. Bei einer direkten, aktiven Methode erfolgt durch Bremsen und/oder Lenken ein aktiver Eingriff in die Fahrdynamik des Fahrzeugs. Bei einer direkten, passiven Methode findet kein aktiver Eingriff in die Fahrdynamik des Fahrzeugs statt. Stattdessen erfolgt lediglich eine Beobachtung von Effekten des max. Reibwerts auf die Reifenauffläche, das Fahrzeug und dergleichen im Verlauf von Fahrmanövern des Fahrzeugs, die dieses zur Erreichung eines vorgegebenen Navigationsziels ausführt. Um die Effekte des max. Reibwerts messen und daraus mit ausreichender Sicherheit auf diesen schließen zu können, ist die Übertragung von Kräften am Reifen Voraussetzung. Die Übertragung hoher Kräfte ist vorteilhaft.

Indirekte, ursachenbasierte Methoden basieren auf der Bestimmung des max. Reibwerts anhand von Parametern, die diesen physikalisch beeinflussen. Dies könnten beispielsweise ein Reifenprofil, die Gummimischung eines Reifens, dessen Temperatur, ein Reifenluftdruck, der Straßenbelag, dessen Temperatur, dessen Beschaffenheit (z.B. Schnee oder Nässe) sein. Von Nachteil sind die erforderliche Vollständigkeit der physikalischen Modellierung sowie die Kenntnis entsprechender funktionaler Zusammenhänge. Hierzu ist ein hoher Sensorikaufwand nötig.

Sofern in der vorliegenden Beschreibung nicht ausdrücklich darauf hingewiesen wird, werden die Begriffe Reibwert und maximaler Reibwert im Folgenden synonym verwendet. Ebenso sind die Begriffe Verteilung und Wahrscheinlichkeitsverteilung als Synonyme anzusehen.

Aus US 2010/0250086 A1 ist ein Verfahren zum Bestimmen eines Haftzustands einer Fahrbahnoberfläche unter Verwendung einer statistischen Mustererkennung bekannt.

Aus DE 10 2007 060 652 A1 ist eine Einrichtung zur Fahrbahnzustandsschätzung bekannt.

Es ist Aufgabe der Erfindung, ein Verfahren und die Vorrichtung zur Schätzung einer Wahrscheinlichkeitsverteilung des maximalen Reibwerts an einem aktuellen und/oder zukünftigen Wegpunkt eines Fahrzeugs anzugeben, welche zur Laufzeit durchgeführt werden kann und sowohl direkte als auch indirekte Methoden im Sinne einer Informationsfusion effizient kombiniert.

Diese Aufgaben werden gelöst durch ein Verfahren gemäß den Merkmalen des Patentanspruches 1 sowie eine Vorrichtung gemäß den Merkmalen des Patentanspruches 15. Vorteilhafte Ausgestaltungen ergeben sich aus den abhängigen Patentansprüchen.

In dem erfindungsgemäßen Verfahren zur Schätzung einer Wahrscheinlichkeitsverteilung des maximalen Reibwerts an einem aktuellen und/oder zukünftigen Wegpunkt eines Fahrzeugs wird aus einer ersten Anzahl an Informationen, welche für einen, beispielsweise aktuellen, Wegpunkt des Fahrzeugs ermittelt werden und welche den max. Reibwert an dem aktuellen Wegpunkt des Fahrzeugs charakterisieren, eine erste Wahrscheinlichkeitsverteilung für den max. Reibwert an dem Wegpunkt des Fahrzeugs ermittelt. Dabei wird die erste Wahrscheinlichkeitsverteilung mittels eines Bayesschen Netzes ermittelt.

Die so generierte Wahrscheinlichkeitsverteilung kann in weiterer Folge als Grundlage zur Schätzung eines maximalen Reibwerts an einem aktuellen und/oder zukünftigen Wegpunkt eines Fahrzeugs dienen. Die genaue Ausgestaltung dieser Schätzung (beispielsweise über statistische Lagemaße wie Erwartungswert, Modus oder Quantile) ist nicht Bestandteil dieser Erfindung.

Erfindungsgemäß wird eine zweite Wahrscheinlichkeitsverteilung für den max. Reibwert an dem zukünftigen Wegpunkt des Fahrzeugs aus einer zweiten Anzahl an Informationen über den zukünftigen Wegpunkt, insbesondere mittels eines Bayesschen Netzes, geschätzt. Weiter wird aus der ersten und der zweiten Wahrscheinlichkeitsverteilung durch eine Kombination eine resultierende, kombinierte Wahrscheinlichkeitsverteilung ermittelt.

Ein Bayessches Netz ist ein gerichteter azyklischer Graph, dessen Knoten Zufallsvariablen und dessen Kanten bedingten Abhängigkeiten entsprechen. Wie dem Fachmann bekannt ist, weist jeder Knoten eine bedingte Wahrscheinlichkeitsverteilung auf, die von der Wahrscheinlichkeitsverteilung der Vorgängerknoten abhängt. Die Verwendung des Bayesschen Netzes als Metamodell ermöglicht es, die Wahrscheinlichkeitsverteilung des max. Reibwerts am aktuellen Wegpunkt des Fahrzeugs zu ermitteln, indem eine Vielzahl vorhandener Informationen effizient genutzt werden, vorzugsweise sämtliche vorhandenen Informationen. Gleichzeitig wird diese Informationsgrundlage, zusammen mit einer Wahrscheinlichkeitsverteilung für den max. Reibwert am zukünftigen Wegpunkt verwendet, um eine hohe Aussagegüte für den max. Reibwert an dem zukünftigen Wegpunkt zu erhalten.

Aus Knoten und Kanten des Bayesschen Netzes wird eine dreistufige Kausalkette gebildet, wobei die Eingangsknoten des Bayesschen Netzes jeweils einen Einflussfaktor auf den max. Reibwert repräsentieren, wobei Ausgangsknoten, die jeweils von dem max. Reibwert abhängig sind, eine Auswirkung oder einen Effekt des max. Reibwerts repräsentieren, und wobei bedingte Abhängigkeiten zwischen einem Eingangsknoten und dem max. Reibwert sowie dem max. Reibwert und einem Ausgangsknoten durch Kanten repräsentiert sind. Das Bayessche Netz kann auch durch eine mehrstufige Kausalkette gebildet sein, wobei die Eingangsknoten und/oder die Ausgangsknoten in eine oder mehrere hierarchischen Ebenen aufgeteilt sind. Jedem Eingangsknoten und jedem Ausgangsknoten wird eine bedingte Wahrscheinlichkeit zugewiesen. Diese bedingten Wahrscheinlichkeiten können aus Erfahrungs- beziehungsweise Trainingsdaten und/oder Expertenwissen gewonnen werden.

Als erste Anzahl an Informationen (d.h. zur Generierung der ersten Wahrscheinlichkeitsverteilung) wird eine oder mehrere der folgenden Informationen am aktuellen Wegpunkt verarbeitet: eine Längs- und/oder Querbeschleunigung des Fahrzeugs; eine Gierrate; Raddrehzahl(en); Reibwertschätzung. Diese Informationen können von den Sensoren des ESC bzw. der Bremse bereitgestellt werden. Als weitere Information kann eine Fahrzeuggeschwindigkeit verarbeitet werden. Die Fahrzeuggeschwindigkeit wird z. B. durch ein in dem Fahrzeug vorhandenes Radarsystem ermittelt, da dieses die Fahrzeuggeschwindigkeit im Vergleich zu anderen Sensoren mit besonders hoher Genauigkeit bereitstellen kann. Alternativ kann die Fahrzeuggeschwindigkeit auch aus Raddrehzahlen und/oder GPS (Globales Positionierungssystem)-Daten ermittelt werden. Als weitere Information(en) können ein Schlupf und/oder eine Reibwertschätzung verarbeitet werden, wobei diese Information(en) von einem Fahrzustandsbeobachter (im Weiteren FZB genannt) bereitgestellt werden können. Es ist weiterhin zweckmäßig, wenn als Information am aktuellen Wegpunkt eine Reibwertschätzung aufgrund von Informationen der Lenkung oder die für solche Zwecke zu verwendenden Lenkungssignale verarbeitet wird. Es kann weiterhin zweckmäßig sein, eine Information über den Fahrertyp bzw. den Fahrstil des Fahrers zu verarbeiten. Fahrertypen könnte beispielsweise ein sportlicher oder ein komfortabler Fahrertyp sein, wobei diese Erkennung anhand von Daten der Getriebesensorik, Pedalwechselzeiten, Querbeschleunigungen des Fahrzeugs, einem Pedalgradienten des Fahrpedals oder eines gewählten Fahrmodus ermittelt werden kann. Zweckmäßigerweise werden auch Wetterinformationen wie z.B. eine Außentemperatur, Art und Intensität eines Niederschlags, Luftfeuchtigkeit und/oder Luftdruck sowie historische und/oder prädizierte Daten der genannten Signale verarbeitet. Diese Informationen können im Fahrzeug messtechnisch erfasst oder von einem Wetterinformationsdienst erhalten werden, wobei die Daten über eine drahtlose Kommunikationsschnittstelle von dem Kraftfahrzeug empfangen und verarbeitet werden können. Zweckmäßigerweise können auch eine Straßentopologie, ein Fahrbahntyp (Asphalt, Beton, Kopfsteinpflaster, Kies und dergleichen), eine Zwischenschicht (Schnee, Nässe und dergleichen) und/oder ein Zustand der Fahrbahn verarbeitet werden. Daten über die Straßentopologie können Kartendaten eines Navigationssystems entnommen werden. Die Straßentopologie umfasst beispielsweise Kurvenkrümmungen, Steigungen und dergleichen. Ein Fahrbahntyp, die Zwischenschicht und der Zustand der Fahrbahn kann von einem Kamerasystem detektiert und/oder ebenfalls aus präzisen Streckendaten (im Weiteren PSD genannt) entnommen werden. Anstelle oder neben des Kamerasystems können weitere Sensoren wie beispielsweise Radar-, Lidar-, Infrarot- und/oder Ultraschallsysteme zum Einsatz kommen.

Zweckmäßigerweise wird die erste Anzahl der Informationen durch eine oder mehrere der folgenden Informationsquellen bereitgestellt oder ermittelt: ESC/Bremse; Radarsystem; Kamerasystem; Lidarsystem; Ultraschallsystem; Infrarotsystem; Fahrzustandsbeobachter; Lenkung; Wetterinformationsdienst; PSD. Manche der Informationsquellen (ESC/Bremse, Radarsystem, Kamerasystem, Lidarsystem, Ultraschallsystem, Infrarotsystem, Fahrzustandsbeobachter, Lenkung) sind dabei Informationsquellen des Fahrzeugs. Die Informationen werden dabei von jeweiligen Steuergeräten (ECU - Electronic Control Unit) bereitgestellt. Andere Informationsquellen, wie der Wetterinformationsdienst oder die PSD sind von dem Kraftfahrzeug unabhängige Informationsquellen, wobei die von diesen bereitgestellten Daten über eine drahtlose Kommunikationsschnittstelle an einen Rechner, z.B. eine zentrale ECU, des Kraftfahrzeugs übertragen werden können.

Erfindungsgemäß wird zur Ermittlung der ersten Wahrscheinlichkeitsverteilung aus der ersten Anzahl an Informationen eine A-Priori-Wahrscheinlichkeitsverteilung für den max. Reibwert am aktuellen Wegpunkt des Fahrzeugs ermittelt, für jeden Ausgangsknoten eine Likelihood-Wahrscheinlichkeitsverteilung anhand der Beobachtung eines konkreten Ausgangswerts am aktuellen Wegpunkt ermittelt, und in einem Korrekturschritt mit Hilfe der bekannten Bayes-Formel aus der A-Priori-Wahrscheinlichkeitsverteilung und jeweiligen Likelihood-Wahrscheinlichkeitsverteilungen eine jeweilige A-Posteriori-Wahrscheinlichkeitsverteilung für den max. Reibwert ermittelt und bewertet.

Die Ermittlung der A-Posteriori-Wahrscheinlichkeitsverteilung umfasst mit anderen Worten die Bestimmung einer A-Priori- sowie einer Likelihood-Verteilung aus gemessenen Daten und/oder Expertenwissen. Die Ermittlung der A-Priori- und Likelihood-Wahrscheinlichkeitsverteilungen am aktuellen Wegpunkt kann beispielsweise mit Hilfe eines linearen oder nicht linearen Regressionsmodells, das an einen Satz an Trainingsdaten angepasst wird, bestimmt werden. Zusätzlich kann beispielsweise durch ein Setzen von Koeffizienten des Regressionsmodells Expertenwissen einbezogen werden.

Erfindungsgemäß erfolgt bei der Ermittlung und/oder Bewertung der Likelihood-Wahrscheinlichkeitsverteilung eine zusätzliche Berücksichtigung der Fahrzeugbeschleunigung. Dadurch kann die Güte der Reibwertschätzung verbessert werden, da diese prinzipbedingt mit zunehmender Reibwertausnutzung steigt.

Erfindungsgemäß erfolgt die Bewertung der jeweiligen A-Posteriori-Wahrscheinlichkeitsverteilung und die Auswahl einer der A-Posteriori-Wahrscheinlichkeitsverteilungen anhand einer Entropie.

Eine Bewertung der gewählten A-Posteriori-Wahrscheinlichkeitsverteilung erfolgt ebenfalls anhand ihrer Entropie.

Bei dem vorliegenden Verfahren ist es dabei zweckmäßig, wenn eine möglichst kleine Entropie erhalten wird, da dann eine möglichst genaue Bestimmung des max. Reibwerts an dem aktuellen Wegpunkt möglich ist. Ist demgegenüber die Entropie hoch, leidet die Aussagequalität über den max. Reibwert an dem aktuellen Wegpunkt. Daher ist es zweckmäßig, wenn bei einer großen Entropie eine direkte, aktive Methode eingesetzt wird, z.B. ein gezielter (radindividueller) Lenk- und/oder Brems-/Beschleunigungseingriff. Durch die Erhöhung einer Kraft in Längs- und/oder Querrichtung verbessert sich die Aussagegüte an den Ausgangsknoten des Bayesschen Netzes. Dadurch ergibt sich eine verbesserte A-Posteriori-Wahrscheinlichkeitsverteilung, was die Aussagequalität insgesamt erhöht.

Es ist weiterhin zweckmäßig, wenn als zweite Anzahl an Informationen eine oder mehrere der folgenden Informationen über den zukünftigen Wegpunkt zur Generierung der zweiten Wahrscheinlichkeitsverteilung verarbeitet werden: Daten von und/oder über ein vorausfahrendes Fahrzeug wie z.B. eine Geschwindigkeit des vorausfahrenden Fahrzeugs, eine Längs- und/oder Querbeschleunigung, eine Gierrate, Raddrehzahlen, eine Reibwertschätzung, Informationen aus der Lenkung; Daten über den Fahrstil des Fahrers eines vorausfahrenden Fahrzeugs oder dessen subjektive Einschätzung der Umgebungsbedingungen und/oder des verfügbaren max. Reibwerts; eine Straßentopologie; eine Art des Straßenbelags; ein Straßenzustand; eine Straßenoberfläche; eine Art des Zwischenmediums; Wetterdaten (z.B. Außentemperatur, Regenintensität, Luftfeuchtigkeit, Luftdruck). Diese Informationen können aus der Sensorik des Kraftfahrzeugs ermittelt und/oder von anderen Verkehrsteilnehmern oder anderen Infrastrukturkomponenten drahtlos empfangen werden. Informationen über die Art des Straßenbelags, des Straßenzustands und der Straßenoberfläche können beispielsweise von einem Anbieter von Kartendaten bereitgestellt werden. Die Art des Zwischenmediums (Schnee, Nässe und dergleichen) kann z.B. von einem Kamera-, Infrarot-, Radar-, Lidar- und/oder Ultraschallsystem detektiert und/oder von einem Wetter- und/oder Kartendienst bereitgestellt werden. Allgemeine Wetterdaten können ebenfalls von einem Wetterdienst bereitgestellt werden. Die oben aufgeführten Informationen können zudem von intelligenten Infrastrukturkomponenten ermittelt und an das Fahrzeug kommuniziert werden.

Zur Kombination der ersten und der zweiten Wahrscheinlichkeitsverteilung wird insbesondere eine Konvexkombination (konvexe Linearkombination) durchgeführt. Bei der Kombination wird ein Vorausschauparameter verarbeitet, der durch eine Gewichtung der ersten und der zweiten Wahrscheinlichkeitsverteilung ein Maß der Vorschau repräsentiert. Der Vorausschauparameter kann gemäß einer weiteren Ausgestaltung abhängig von der ermittelten Entropie der ersten und/oder zweiten Wahrscheinlichkeitsverteilung und/oder der für die Bestimmung des Reibwerts zur Verfügung stehenden Sensorik inner- und außerhalb des Fahrzeugs gewählt werden. Wahlweise kann der Vorausschauparameter adaptiv oder fest gewählt werden. Insbesondere kann der Vorausschauparameter z.B. abhängig von der Anzahl der zur Verfügung stehenden ersten und/oder zweiten Anzahl an Informationen gewählt werden. Der zukünftige Wegpunkt kann, insbesondere bei einem vorausfahrenden Fahrzeug, adaptiv gewählt werden. Dadurch können beispielsweise die von einem vorausfahrenden Fahrzeug sensorisch erfassten Parameter, welche zur Ermittlung des max. Reibwerts am zukünftigen Wegpunkt berücksichtigt werden oder ein von einem vorausfahrenden Fahrzeug ermittelter max. Reibwert selbst, mit einer vorliegenden hohen Genauigkeit berücksichtigt werden.

Es versteht sich, dass bei der Berechnung einer resultierenden Wahrscheinlichkeitsverteilung auch mehr als zwei Wahrscheinlichkeitsverteilungen berücksichtigt werden können. In diesem Fall können mehrere Vorausschauparameter zur Bildung einer Konvexkombination verwendet werden. Dieses Vorgehen bietet sich insbesondere dann an, wenn Informationen über den max. Reibwert an mehr als einem Vorausschaupunkt zur Verfügung stehen.

Die Erfindung schafft ferner eine Vorrichtung zur Schätzung einer Wahrscheinlichkeitsverteilung des maximalen Reibwerts an einem aktuellen und zukünftigen Wegpunkt eines Fahrzeugs. Die Vorrichtung umfasst ein erstes Mittel, um mittels eines Bayesschen Netzes aus einer ersten Anzahl an Informationen, welche für einen, insbesondere aktuellen, Wegpunkt des Fahrzeugs ermittelt werden oder wurden und welche den max. Reibwert an dem Wegpunkt des Fahrzeugs charakterisieren, eine erste Wahrscheinlichkeitsverteilung für den max. Reibwert an dem Wegpunkt des Fahrzeugs zu generieren. Zweckmäßigerweise umfasst die Vorrichtung ein zweites Mittel, um eine zweite Wahrscheinlichkeitsverteilung für den max. Reibwert an dem zukünftigen Wegpunkt des Fahrzeugs aus einer zweiten Anzahl an Informationen über den zukünftigen Wegpunkt zu schätzen, sowie ein drittes Mittel, um aus der ersten und der zweiten Wahrscheinlichkeitsverteilung eine resultierende Wahrscheinlichkeitsverteilung zu ermitteln, insbesondere durch eine Konvexkombination.

Die Vorrichtung weist die gleichen Vorteile auf, wie diese vorstehend in Verbindung mit dem erfindungsgemäßen Verfahren beschrieben wurden.

Darüber hinaus umfasst die Vorrichtung weitere Mittel zur Durchführung des Verfahrens.

Die Erfindung wird nachfolgend näher anhand eines Ausführungsbeispiels in der Zeichnung beschrieben. Es zeigen:

Fig. 1 eine schematische Darstellung einer Kausalkette eines im erfindungsgemäßen Verfahren eingesetzten Metamodells eines möglichen Bayesschen Netzes;
Fig. 2 eine schematische Darstellung der beispielhaft in einem Bayesschen Netz zur Anwendung kommenden Informationen;
Fig. 3 eine schematische Darstellung, wie aus einer A-Priori-Verteilung mit Hilfe eines Bayesschen Netzes Likelihood- und A-Posteriori-Verteilungen erzeugt werden;
Fig. 4 eine schematische Darstellung der Ermittlung einer resultierenden, kombinierten Wahrscheinlichkeitsverteilung; und
Figuren 5a bis 5b Ausführungsbeispiele unterschiedlicher resultierender Wahrscheinlichkeitsverteilungen.

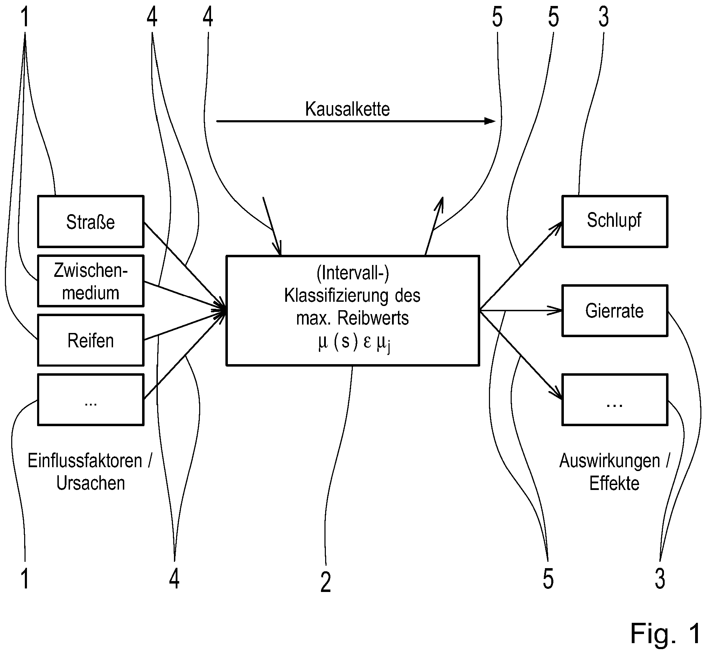

Grundlage für das Verfahren bildet ein vereinfachtes Bayessches Netz, das aus Knoten 1, 2, 3 und Kanten 4, 5 besteht und eine dreistufige Kausalkette darstellt, wie dies in Fig. 1 gezeigt ist. Die Kausalkette besteht aus Einflussfaktoren bzw. Ursachen u des max. Reibwerts $\mu$, dem max. Reibwert $\mu$ selbst und Auswirkungen bzw. Effekten y, welche Ausgänge des Bayesschen Netz gemäß Fig. 1 darstellen. Abhängigkeiten zwischen den die Einflussfaktoren repräsentierenden Knoten 1 und dem den max. Reibwert repräsentierenden Knoten 2 sind als gerichtete Kanten 4 modelliert. Ebenso sind Abhängigkeiten zwischen dem den max. Reibwert $\mu$ repräsentierenden Knoten 2 und den die Auswirkungen repräsentierenden Knoten 3 als gerichtete Kanten 5 modelliert. Es versteht sich, dass das Bayessche Netz auch weniger (z.B. Bestimmung einer unten beschriebenen A-Priori-Wahrscheinlichkeitsverteilung an einem zukünftigen Wegpunkt) oder mehr als drei kausalen Stufen umfassen kann. Letzteres ist insbesondere dann der Fall, wenn einige auf der Eingangsseite angeordnete Knoten in einer weiteren Ebene zwischen den Knoten 1 und 2 in Fig. 1 gebündelt werden (beispielsweise zur Klassifikation einer Straßenoberfläche, eines Reifentyps oder eines Zwischenmediums). Der Vorteil eines solchen Bayesschen Netzes besteht darin, dass sowohl Informationen aus Vorwissen sowie aus Daten zur Bestimmung der bedingten Wahrscheinlichkeiten an den Knoten und somit zur Bestimmung der Wahrscheinlichkeitsverteilung des max. Reibwerts $\mu$ genutzt werden. Insbesondere ergibt sich die Möglichkeit, unterschiedliche, bekannte oder neuartige, auf direkten und indirekten Methoden basierende Einzelkonzepte zur Reibwertschätzung effizient zu kombinieren. Zudem können durch den modularen Aufbau einzelne Knoten 1 oder 3 des Netzes hinzugefügt oder weggelassen werden, was zwar die Qualität der Reibwertschätzung beeinflusst, konzeptionell jedoch keine Änderungen erforderlich macht.

Einflussfaktoren u (d.h. Knoten 1) auf den max. Reibwert $\mu$ (d.h. auf den Knoten 2) sind z.B. die Fahrbahn (Straße) im Hinblick auf ihre Topologie und ihren Zustand, der Reifen (Profil, Reifendruck, Gummimischung, Temperatur usw.), ein zwischen dem Straßenbelag und dem Reifen vorhandenes Zwischenmedium (Feuchtigkeit, Nässe, Schnee, Eis, Split usw.) sowie das Fahrzeug selbst. Auswirkungen y (d.h. Knoten 3) des max. Reibwerts $\mu$ (d.h. des Knotens 2) sind z.B. der Schlupf, eine Gierrate, eine (maximal mögliche) Beschleunigung und dergleichen. Daneben existieren weitere, hier nicht aufgezählte Einflussfaktoren u und Auswirkungen y.

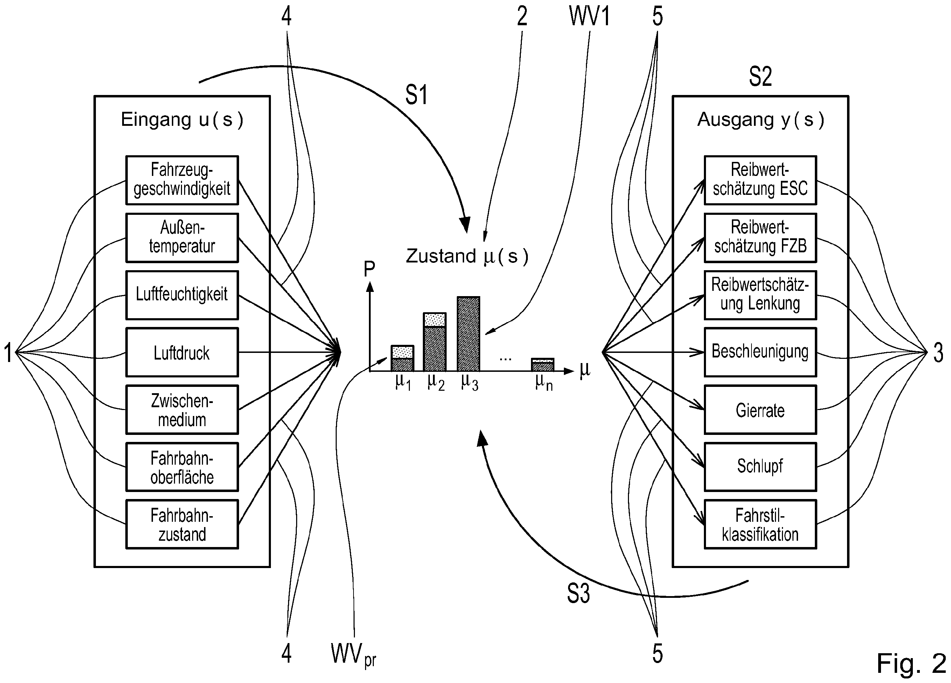

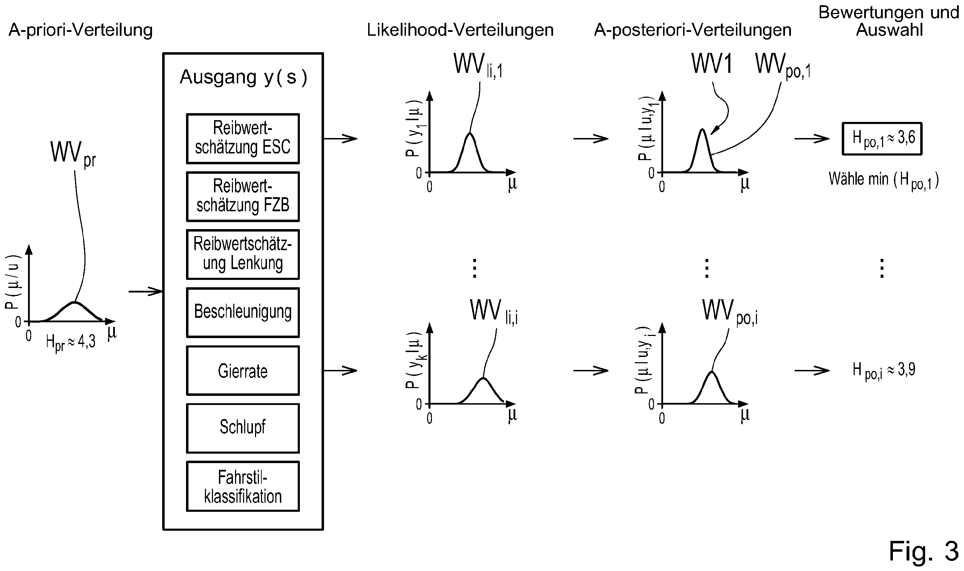

Unter Bezugnahme auf die Fig. 2 und 3 werden nun die erfindungsgemäß durchzuführenden Schritte zur Bestimmung einer ersten Wahrscheinlichkeitsverteilung, die die Wahrscheinlichkeitsverteilung des max. Reibwerts $\mu$ unter dem Fahrzeug (d.h. an einem aktuellen Wegpunkt des Fahrzeugs) repräsentiert, beschrieben. In einem ersten Schritt S1 des Verfahrens werden A-Priori-Wahrscheinlichkeiten $P_{uF,pr}(\mu(s) \mid u(s))$ für den an einem aktuellen Wegpunkt s vorherrschenden max. Reibwert $\mu$ unter dem Fahrzeug unter gegebenen Eingängen u berechnet. Die so generierte A-Priori-Verteilung $WV_{pr}$ kann diskret oder als kontinuierliche Verteilung ermittelt werden, wobei Fig. 2 eine diskrete und Fig. 3 eine kontinuierliche Verteilung zeigen. Fig. 2 zeigt mögliche Eingänge u(s), die zur Ermittlung von WV$_{pr}$ herangezogen werden können.

Es versteht sich, dass die in Fig. 2 gezeigten Eingangsdaten u(s) lediglich beispielhaft gewählt sind. Die Daten können von Sensoren des Fahrzeugs selbst oder von Dienstleistern außerhalb des Kraftfahrzeugs bereitgestellt werden.

In einem Fahrzeug zur Verfügung stehende Informationsquellen sind allgemein beispielsweise ein ESC zur Bereitstellung von Beschleunigungen, Gierrate, Raddrehzahlen sowie eventuell einer Reibwertschätzung, ein Radar zur Bereitstellung der Fahrzeuggeschwindigkeit, ein Fahrzustandsbeobachter zur Bereitstellung einer Schlupf- und/oder Reibwertschätzung, eine Lenkung zur Bereitstellung einer Reibwertschätzung, eine Fahrstilbewertung/-klassifikation. Unter dem Begriff Reibwertschätzung wird dabei sowohl die Bereitstellung eines Skalars als auch eines Intervalls für den max. Reibwert verstanden. Die Bewertung bzw. Klassifikation eines Fahrstils kann beispielsweise anhand von Getriebedaten, Pedalwechselzeiten, Pedalgradienten und/oder Querbeschleunigungen ermittelt werden. Es versteht sich, dass die entsprechenden Informationen von jeweiligen Steuergeräten der Informationsquellen ermittelt und bereitgestellt werden.

Die von einem Wetterinformationsdienst bereitgestellten Daten umfassen grundsätzlich alle denkbaren Wetterdaten, darunter Außentemperatur, Regenintensität, Luftfeuchtigkeit und Luftdruck.

Die Topologie betreffende Daten können durch einen Kartenanbieter bereitgestellt werden. Die Topologie umfasst dabei Steigungen, Kurvenkrümmungen, Kurvenradien, Fahrbahnneigungswinkel, Fahrbahnunebenheiten, Fahrbahnwelligkeiten, Schlaglöcher und dergleichen. Ebenso können solche Daten Informationen über einen Straßenoberfläche, Straßenzustand und Art des Straßenbelags umfassen. Die Information über eine Straßenfeuchte kann durch die Verknüpfung von Wetterinformationen und Kartendaten bereitgestellt werden. In diesem Zusammenhang sind sowohl historische als auch aktuelle und prognostizierte Daten von Bedeutung. Zur Bestimmung von Eigenschaften der Fahrbahnoberfläche und/oder eines Zwischenmediums können zusätzlich oder ausschließlich fahrzeuginterne Sensoren wie beispielsweise Kamera-, Radar-, Lidar-, Infrarot-, Ultraschallsysteme und/oder Komponenten einer intelligenten Infrastruktur zum Einsatz kommen.

Die Bestimmung der A-Priori-Verteilung WV$_{pr}$ kann beispielsweise mit Hilfe eines Regressionsmodells erfolgen, das auf ein ausreichend großes Set an Trainingsdaten angepasst wird. Beispielsweise kann eine lineare Regression zur Anwendung gelangen. Grundsätzlich kann jedoch auch ein nicht lineares einfaches oder multiples Regressionsmodell genutzt werden. Das Setzen einiger Koeffizienten des Regressionsmodells stellt eine Möglichkeit zur Einbeziehung semantischen Expertenwissens dar, welches nicht zwangsläufig in den Trainingsdaten abgebildet sein muss.

Des Weiteren werden in einem zweiten Schritt S2 Likelihood-Wahrscheinlichkeiten $P_{uF,li}(y(s) \mid \mu(s))$ unter gegebenem Reibwert $\mu$ und weiteren Parametern, wie z.B. Beschleunigungen, mit Hilfe eines weiteren Regressionsmodells auf Basis eines ausreichend großen Sets an Trainingsdaten bestimmt. Auch hier kann ein beliebiges Regressionsmodell zur Anwendung kommen (linear / nichtlinear, einfach / multinomial, parametrisch / nichtparametrisch etc.). Die Wahl einer geeigneten Methode ist abhängig von der Struktur der Ausgangsdaten y(s). Liegen kontinuierliche Daten, z.B. eines Fahrzustandsbeobachters vor, so bietet sich eine lineare oder nicht lineare Regression an. Umfassen die Ausgangsdaten beispielsweise eine Fahrstilklassifikation, so liegen kategorische Daten vor. Hier ist eine (multinomiale) logistische Regression zweckmäßig. Wie beschrieben, kann als weiterer Parameter eine Fahrzeugbeschleunigung verarbeitet werden, da prinzipbedingt die Güte der Reibwertschätzung mit zunehmender Reibwertausnutzung, d.h. übertragener Kraft am Reifen, steigt. Im Ergebnis gelingt die Bestimmung von Wahrscheinlichkeitsverteilungen WV$_{li,i}$ (mit i = 1...k) für die Beobachtung eines konkreten Ausgangswerts y(s) am aktuellen Wegpunkt s für jeden der k Knoten 3 auf der Ausgangsseite des Bayesschen Netzes (siehe Fig. 3).

In dem in den Fig. 2 und 3 betrachteten Ausführungsbeispiel werden als Ausgänge y(s) eine Reibwertschätzung des ESC, eine Fahrzeugbeschleunigung, eine Gierrate, ein Schlupf, eine Reibwertschätzung des FZB, eine Reibwertschätzung der Lenkung sowie eine Fahrstilklassifikation betrachtet. Es versteht sich, dass die in Fig. 2 und 3 gezeigten Ausgänge y(s) lediglich beispielhaft gewählt sind.

Die Bestimmung der Likelihood-Wahrscheinlichkeitsverteilungen WV$_{li,i}$ stellt eine Beobachtung der Auswirkungen des max. Reibwerts dar, wenn das Fahrzeug über den aktuellen Wegpunkt fährt. Basierend auf diesen beobachteten Likelihood-Wahrscheinlichkeitsverteilungen erfolgt dann eine Korrektur der im Schritt S1 bestimmten A-Priori-Wahrscheinlichkeitsverteilung WV$_{pr}$.

Mit Hilfe der Bayes-Formel

$$P_{uF,po,i}\big(\mu \in \mu_j \mid u, y_i\big) = \frac{P(y_i \mid \mu\in\mu_j)\cdot P(\mu\in\mu_j \mid u)}{\sum_j P(y_i \mid \mu\in\mu_j)\cdot P(\mu\in\mu_j \mid u)} \qquad (1)$$

werden schließlich in einem Korrekturschritt (Schritt S3) aus der A-Priori-Verteilung WV$_{pr}$ und den jeweiligen Likelihood-Verteilungen WV$_{li,i}$ für verschiedene Ausgänge y(s) A-Posteriori-Verteilungen $P_{uF,po}(\mu(s) \mid u(s), y(s))$ für den max. Reibwert $\mu$ unter dem Fahrzeug berechnet, welche in Fig. 3 mit WV$_{po,i}$ bezeichnet sind (mit i = 1 ...k).

Im nächsten Schritt werden die vorliegenden A-Posteriori-Verteilungen $WV_{po,i}$ bewertet und eine davon ausgewählt. Die Bewertung der A-Posteriori-Verteilungen $WV_{po,i}$ erfolgt anhand ihrer Entropie H mit

$$H_{po,i} = -\sum_j P_{uF,po,i}\big(\mu \in \mu_j \mid u, y_k\big) \cdot \ln P_{uF,po,i}\big(\mu \in \mu_j \mid u, y_k\big)$$

$$(2)$$

Damit liegt eine erste Wahrscheinlichkeitsverteilung WV1 für den max. Reibwert $\mu$ unter dem Fahrzeug am aktuellen Wegpunkt s vor.

In Fig. 3 ist das beschriebene Vorgehen figürlich illustriert. Hier sind die aufeinanderfolgenden Teilschritte der Bestimmung der A-Posteriori-Wahrscheinlichkeitsverteilungen $WV_{po,i}$ für den am aktuellen Wegpunkt s verfügbaren max. Reibwert $\mu$ unter dem Fahrzeug unter den gegebenen Eingängen und unter gegebenen Ausgängen y(s) dargestellt. Ebenso sind die Teilschritte der Bestimmung der Likelihood-Verteilungen $WV_{li,i}$ sowie die Bewertung und Auswahl anhand der Entropie H zu erkennen. Wie anhand der schematischen Fig. 3 erkennbar ist, wird diejenige Wahrscheinlichkeitsverteilung ausgewählt, deren Entropie H minimal ist. In Fig. 3 ist dies die in der obersten Zeile dargestellte A-Posteriori-Wahrscheinlichkeitsverteilung $WV_{po,1}$ mit der Entropie $H_{po,1} \approx 3{,}6$.

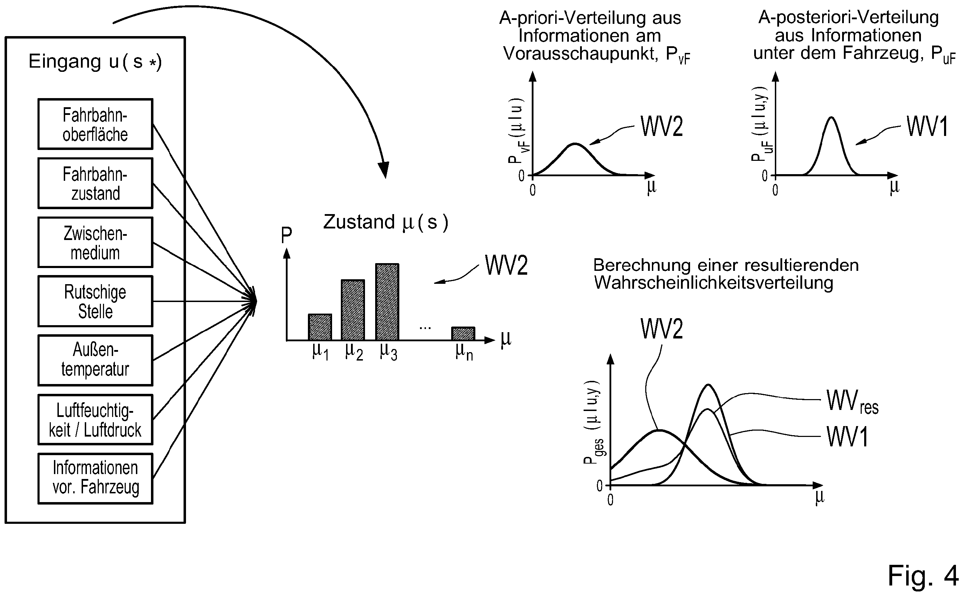

In einem nächsten Schritt (siehe Fig. 4) erfolgt die Schätzung einer zweiten Wahrscheinlichkeitsverteilung WV2 für den max. Reibwert vor dem Fahrzeug an einem zukünftigen Wegpunkt s*. Der zukünftige Wegpunkt wird auch als Vorausschaupunkt s* bezeichnet. Mit Hilfe von Informationen über den zukünftigen Wegpunkt s* kann eine A-Priori-Wahrscheinlichkeitsverteilung $P_{vF,pr}(\mu(s^*) \mid u(s^*))$ für den dortigen max. Reibwert $\mu$ angegeben werden. Bei diesen Informationen kann es sich beispielsweise um die Fahrbahnoberfläche, den Fahrbahnzustand, ein mögliches Zwischenmedium (Schnee, Feuchtigkeit, Regen), Wetterbedingungen (Außentemperatur, Luftfeuchtigkeit, Luftdruck), Informationen eines vorausfahrenden Fahrzeugs usw. handeln. Die Informationen können aus der Bordsensorik, von anderen Verkehrsteilnehmern oder einer Infrastrukturkomponente kommen. Die in diesem Schritt erhaltene Verteilung WV2 stellt eine zweite Wahrscheinlichkeitsverteilung dar, die in diskreter oder kontinuierlicher Form vorliegen kann, wobei Fig. 4 beides zeigt. Die Bestimmung der zweiten Wahrscheinlichkeitsverteilung WV2 kann wie die Bestimmung der A-Priori-Verteilung $WV_{pr}$ aus Schritt S1 beispielsweise mit Hilfe eines Regressionsmodells erfolgen, das auf ein ausreichend großes Set an Trainingsdaten angepasst wird. Beispielsweise kann eine lineare Regression zur Anwendung gelangen. Grundsätzlich kann jedoch auch ein nicht lineares Regressionsmodell genutzt werden. Das Setzen einiger Koeffizienten des Regressionsmodells stellt eine Möglichkeit zur Einbeziehung semantischen Expertenwissens dar, welches nicht zwangsläufig in den Trainingsdaten abgebildet sein muss. In einem letzten Schritt erfolgt eine Berechnung einer resultierenden, kombinierten Wahrscheinlichkeitsverteilung $WV_{res}$ für den max. Reibwert aus der zuvor ermittelten ersten Wahrscheinlichkeitsverteilung WV1 (vgl. das in Verbindung mit den Figuren 2 und 3 beschriebene Vorgehen) sowie der zweiten Wahrscheinlichkeitsverteilung WV2 für den max. Reibwert an dem zukünftigen Wegpunkt s*. Die Kombination kann mit Hilfe einer Konvexkombination und eines Vorausschauparameters a, wobei $0 \le \alpha \le 1$ gilt, durchgeführt werden. Die Konvexkombination erfolgt gemäß der Gleichung

$$WV_{res} = (1\text{-}\alpha) \cdot WV1 + \alpha \cdot WV2 \qquad (3)$$

Der Vorausschauparameter $\alpha$ charakterisiert, wie vorausschauend die Schätzung ist, indem die erste und die zweite Wahrscheinlichkeitsverteilung WV1 und WV2 gewichtet werden. Der Vorausschauparameter $\alpha$ kann fest gewählt werden. Er kann auch abhängig von vorliegenden Informationen, wie beispielsweise der Entropie von WV1 und/oder WV2 oder der Art bzw. dem Umfang der Information am Vorausschaupunkt s* bestimmt werden. In diesem Fall wird der Vorausschauparameter $\alpha$ zu jedem Zeitpunkt, an dem mindestens eine der beiden Wahrscheinlichkeitsverteilungen WV1 und WV2 ein Update erfährt, neu gewählt.

Die Kombination der ersten Wahrscheinlichkeitsverteilung WV1 (A-Posteriori-Verteilung aus Informationen unter dem Fahrzeug, $P_{uF}$) und der zweiten Wahrscheinlichkeitsverteilung WV2 (A-Priori-Verteilung aus Informationen am Vorausschaupunkt, $P_{vF}$) und die Berechnung der resultierenden, kombinierten Wahrscheinlichkeitsverteilung $WV_{res}$ ist in Fig. 4 illustriert. Dabei wurde exemplarisch ein Vorausschauparameter von $\alpha = 0{,}3$ angenommen.

Bei der Berechnung einer resultierenden Wahrscheinlichkeitsverteilung aus mehr als zwei Wahrscheinlichkeitsverteilungen können mehrere Vorausschauparameter zur Bildung einer Konvexkombination verwendet werden. Dieses Vorgehen bietet sich insbesondere dann an, wenn Informationen über den max. Reibwert an mehr als einem Vorausschaupunkt zur Verfügung stehen. Es gilt

$$WV_{res} = \sum_i \alpha_i \cdot WV_i \qquad \text{mit} \sum_i \alpha_i = 1 \qquad (4)$$

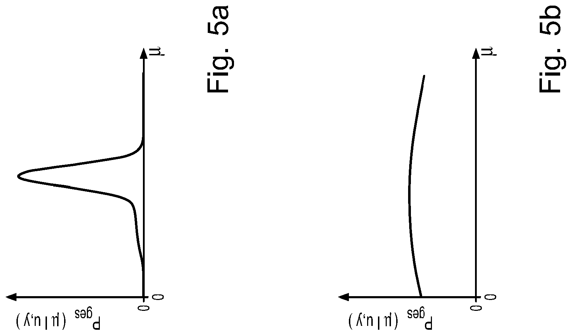

Ist die resultierende Wahrscheinlichkeitsverteilung für den max. Reibwert wenig informativ (vgl. den Verlauf der Wahrscheinlichkeitsverteilung $P_{ges}(\mu|\mu, y)$ in Fig. 5b), d.h. weist diese einen flachen Verlauf auf, was beispielsweise anhand der Entropie erkannt werden kann, so kann eine direkte, aktive Methode zur Ermittlung des max. Reibwerts eingesetzt werden, z.B. durch einen gezielten (radindividuellen) Lenk- und/oder Brems-/Beschleunigungseingriff, insbesondere bei gleichzeitig kurzfristig erhöhtem Motormoment. Hierdurch wird die an den Reifen übertragene Kraft vergrößert, was eine bessere Aussagegüte an den Ausgängen y(s) ermöglicht. Dadurch ergibt sich ein "schärferer" Verlauf einiger Likelihood-Wahrscheinlichkeitsverteilungen, der sich wiederum in einem "schärferen" Verlauf der resultierenden Wahrscheinlichkeitsverteilung niederschlägt wie dies schematisch in Fig. 5a gezeigt ist. Anstelle einer Betrachtung der resultierenden Wahrscheinlichkeitsverteilung (wie in Fig. 5 dargestellt) kann auch aus dem Verlauf der Likelihood- und/oder A-Posteriori-Wahrscheinlichkeitsverteilungen für den max. Reibwert unter dem Fahrzeug ein Handlungsbedarf im Sinne der Initiierung einer direkten, aktiven Methode zur exakteren Schätzung des max. Reibwerts abgeleitet werden.

Für den Fall, dass die Annahme eines sich nur langsam über den Fahrtweg des Kraftfahrzeugs verändernden max. Reibwerts $\mu$ nicht zutreffen sollte und sich die Wahrscheinlichkeitsverteilungen WV1 und WV2 für den max. Reibwert unter bzw. vor dem Fahrzeug, beispielsweise gemessen an einem Erwartungswert, stark unterscheiden, so kann eine Anpassung des Vorausschauparameters $\alpha$ vorgenommen werden, um den Punkt der Reibwertänderungen exakter zu bestimmen. Alternativ kann das Fahrzeug auf neue Randbedingungen an dem zukünftigen Wegpunkt vorbereitet werden. Dies kann z.B. durch Verzögerung, Verhinderung einer weiteren Geschwindigkeitszunahme und dergleichen erfolgen.

## Patentansprüche

1. Verfahren zur Schätzung einer Wahrscheinlichkeitsverteilung eines maximalen Reibwerts ($\mu$) an einem aktuellen und einem zukünftigen Wegpunkt (s, s*) eines Fahrzeugs,

   bei dem aus einer ersten Anzahl an Informationen, welche für den aktuellen Wegpunkt (s) des Fahrzeugs ermittelt werden oder wurden, und welche den maximalen Reibwert ($\mu$) an dem aktuellen Wegpunkt (s) des Fahrzeugs charakterisieren, eine erste Wahrscheinlichkeitsverteilung (WV1) für den maximalen Reibwert ($\mu$) an dem aktuellen Wegpunkt (s) des Fahrzeugs ermittelt wird,
   wobei die erste Wahrscheinlichkeitsverteilung (WV1) mittels eines Bayesschen Netzes ermittelt wird,
   wobei eine zweite Wahrscheinlichkeitsverteilung (WV2) für den maximalen Reibwert ($\mu$) an dem zukünftigen Wegpunkt (s*) des Fahrzeugs aus einer zweiten Anzahl an Informationen über den zukünftigen Wegpunkt (s*), insbesondere mittels des Bayesschen Netzes, geschätzt wird;
   wobei aus der ersten und der zweiten Wahrscheinlichkeitsverteilung (WV1, WV2) durch eine Kombination eine resultierende Wahrscheinlichkeitsverteilung (WV$_{res}$) ermittelt wird,
   wobei zur Ermittlung der ersten Wahrscheinlichkeitsverteilung (WV1) aus der ersten Anzahl an Informationen eine A-Priori-Wahrscheinlichkeitsverteilung (WV$_{pr}$) für den maximalen Reibwert ($\mu$) ermittelt wird;
   wobei für jeden Ausgangsknoten (y(s)) des Bayesschen Netzes aus der ersten Anzahl an Informationen eine Likelihood-Wahrscheinlichkeitsverteilung (WV$_{li,i}$) anhand der Beobachtung eines konkreten Ausgangswerts am aktuellen Wegpunkt (s) ermittelt wird;
   wobei für zumindest einen Teil der Ausgangsknoten (y(s)) in einem Korrekturschritt mit Hilfe der Bayes-Formel aus der A-Priori-Wahrscheinlichkeitsverteilung (WV$_{pr}$) und der jeweiligen Likelihood-Wahrscheinlichkeitsverteilung (WV$_{li,i}$) eine jeweilige A-posteriori-Wahrscheinlichkeitsverteilung (WV$_{po,i}$) für den maximalen Reibwert ($\mu$) ermittelt wird,
   wobei die jeweilige A-Posteriori-Wahrscheinlichkeitsverteilung (WV$_{po,i}$) für den maximalen Reibwert ($\mu$) bewertet wird,
   wobei bei der Ermittlung der Likelihood-Wahrscheinlichkeitsverteilung (WV$_{li,i}$) eine zusätzliche Berücksichtigung einer Fahrzeugbeschleunigung erfolgt,
   **dadurch gekennzeichnet, dass** die Bewertung der jeweiligen A-posteriori-Wahrscheinlichkeitsverteilung (WV$_{po,i}$) und eine Auswahl einer der A-posteriori-Wahrscheinlichkeitsverteilungen (WV$_{po,i}$) anhand einer Entropie erfolgt.

2. Verfahren nach Anspruch 1 , bei dem aus Knoten (1, 2, 3) und Kanten (4, 5) des Bayesschen Netzes eine dreistufige Kausalkette gebildet wird, wobei Eingangsknoten (u(s)) des Bayesschen Netzes jeweils einen Einflussfaktor auf den max. Reibwert ($\mu$) repräsentieren,

die Ausgangsknoten (y(s)), die jeweils von dem maximalen Reibwert ($\mu$) abhängig sind, eine Auswirkung oder einen Effekt des maximalen Reibwerts ($\mu$) repräsentieren, und

jede bedingte Abhängigkeit zwischen einem der Eingangsknoten (u(s)) und dem maximalen Reibwert ($\mu$) sowie dem maximalen Reibwert ($\mu$) und einem der Ausgangsknoten (y(s)) durch eine der Kanten (4, 5) repräsentiert ist.

3. Verfahren nach Anspruch 1, bei dem das Bayessche Netz eine mehrstufige Kausalkette bildet, wobei

die Eingangsknoten (u(s)) in eine oder mehrere hierarchischen Ebenen aufgeteilt sind, und/oder die Ausgangsknoten (y(s)) in eine oder mehrere hierarchischen Ebenen aufgeteilt sind.

4. Verfahren nach einem der vorhergehenden Ansprüche, bei dem jedem Knoten (1, 2, 3) des Bayesschen Netzes eine bedingte Wahrscheinlichkeit zugewiesen wird.

5. Verfahren nach einem der vorhergehenden Ansprüche, bei dem als erste und/oder zweite Anzahl an Informationen eine oder mehrere der folgenden Informationen verarbeitet wird:

- Längs- und/oder Querbeschleunigung des Fahrzeugs; Gierrate; Raddrehzahl(en); Reibwertschätzung aufgrund der Längsdynamik des Fahrzeugs;
- Fahrzeuggeschwindigkeit;
- Schlupf;
- Reibwertschätzung aufgrund der Querdynamik des Fahrzeugs;
- Reibwertschätzung aufgrund einer Kombination aus Längs- und Querdynamik des Fahrzeugs
- Fahrertyp bzw. Fahrstil(klassifikation);
- Außentemperatur; Regenintensität; Luftfeuchtigkeit; Luftdruck;
- Straßentopologie; Feuchte der Fahrbahn; Art und Zustand der Fahrbahn; Art des Zwischenmediums.

6. Verfahren nach einem der vorhergehenden Ansprüche, bei dem die erste und/oder zweite Anzahl der Informationen durch eine oder mehrere der folgenden Informationsquellen bereitgestellt oder ermittelt wird:

- ESC/Bremse; Radar-, Kamera-, Lidar-, Ultraschall-, Infrarotsystem; Fahrzustandsbeobachter; Lenkung; Wetterinformationsdienst; präzise Kartendaten (PSD), intelligente Infrastrukturkomponenten.

7. Verfahren nach einem der vorhergehenden Ansprüche, bei dem bei einer großen Entropie ein gezielter Lenk- und/oder, insbesondere radindividueller, Brems- bzw. Beschleunigungseingriff durchgeführt wird.

8. Verfahren nach einem der vorhergehenden Ansprüche, bei dem zur Ermittlung der zweiten Wahrscheinlichkeitsverteilung (WV2) als Information über den zukünftigen Wegpunkt (s*) eine oder mehrere der folgenden Informationen verarbeitet wird:
Daten von und/oder über ein vorausfahrendes Fahrzeug; Daten von und/oder über einen Fahrer eines vorausfahrenden Fahrzeugs; Straßentopologie; Art des Straßenbelags; Straßenzustand; Straßenoberfläche; Art des Zwischenmediums; Wetterdaten, insbesondere Außentemperatur, Regenintensität, Luftfeuchtigkeit, Luftdruck; präzise Kartendaten (PSD); Daten von intelligenten Infrastrukturkomponenten.

9. Verfahren nach einem der vorhergehenden Ansprüche, bei dem zur Kombination der ersten und der zweiten Wahrscheinlichkeitsverteilung (WV1, WV2) eine Konvexkombination durchgeführt wird.

10. Verfahren nach Anspruch 9, bei dem bei der Kombination ein Vorausschauparameter ($\alpha$) verarbeitet wird, der durch eine Gewichtung der ersten und der zweiten Wahrscheinlichkeitsverteilung (WV1, WV2) ein Maß der Vorausschau repräsentiert.

11. Verfahren nach Anspruch 10, bei dem bei der Kombination zumindest ein weiterer Vorausschauparameter ($\alpha$) verarbeitet wird.

12. Verfahren nach Anspruch 10 oder 11, bei dem der Vorausschauparameter ($\alpha$) abhängig von der ermittelten Entropie einer jeweiligen Wahrscheinlichkeitsverteilung und/oder der für die Bestimmung des maximalen Reibwerts ($\mu$) zur Verfügung stehenden Informationen einer Sensorik des Fahrzeugs gewählt wird.

13. Verfahren nach einem der vorhergehenden Ansprüche, bei dem der zukünftige Wegpunkt (s*) adaptiv gewählt wird.

**14.** Verfahren nach einem der vorhergehenden Ansprüche, bei dem zusätzlich zu der zweiten Wahrscheinlichkeitsverteilung für den maximalen Reibwert ($\mu$) an dem zukünftigen Wegpunkt (s*) eine oder mehrere weitere Wahrscheinlichkeitsverteilungen für den maximalen Reibwert ($\mu$) an einem oder mehreren weiteren Vorausschaupunkten ($s_i^*$) zur Bestimmung der resultierenden Wahrscheinlichkeitsverteilung für den maximalen Reibwert ($\mu$) verarbeitet werden.

**15.** Vorrichtung zur Schätzung einer Wahrscheinlichkeitsverteilung eines maximalen Reibwerts ($\mu$) an einem aktuellen und einem zukünftigen Wegpunkt (s*) eines Fahrzeugs, umfassend:

ein erstes Mittel, um mittels eines Bayesschen Netzes aus einer ersten Anzahl an Informationen, welche für den aktuellen Wegpunkt (s) des Fahrzeugs ermittelt werden oder wurden und welche den maximalen Reibwert ($\mu$) an dem Wegpunkt (s) des Fahrzeugs charakterisieren, eine erste Wahrscheinlichkeitsverteilung (WV1) für den maximalen Reibwert ($\mu$) an dem Wegpunkt (s) des Fahrzeugs zu generieren,
ein zweites Mittel, um mittels des Bayesschen Netzes eine zweite Wahrscheinlichkeitsverteilung (WV2) für den maximalen Reibwert ($\mu$) an dem zukünftigen Wegpunkt (s*) des Fahrzeugs aus einer zweiten Anzahl an Informationen über den zukünftigen Wegpunkt (s*) zu schätzen;
ein drittes Mittel, um aus der ersten und der zweiten Wahrscheinlichkeitsverteilung (WV1, WV2) eine resultierende Wahrscheinlichkeitsverteilung (WV$_{res}$) durch eine Kombination zu ermitteln, wobei die Vorrichtung dazu eingerichtet ist, mittels der Mittel ein Verfahren nach einem der vorhergehenden Ansprüche durchzuführen.

**Claims**

**1.** Method for estimating a probability distribution of a maximum coefficient of friction ($\mu$) at a current and a future waypoint (s, s*) of a vehicle, in which

a first probability distribution (WV1) for the maximum coefficient of friction ($\mu$) at the current waypoint (s) of the vehicle is determined from a first number of items of information which are or have been determined for the current waypoint (s) of the vehicle and characterize the maximum coefficient of friction ($\mu$) at the current waypoint (s) of the vehicle,
wherein the first probability distribution (WV1) is determined by means of a Bayesian network,
wherein a second probability distribution (WV2) for the maximum coefficient of friction ($\mu$) at the future waypoint (s*) of the vehicle is estimated from a second number of items of information relating to the future waypoint (s*), in particular by means of the Bayesian network;
wherein a resulting probability distribution (WV$_{res}$) is determined from the first and second probability distributions (WV1, WV2) by means of a combination,
wherein, in order to determine the first probability distribution (WV1) from the first number of items of information, an a priori probability distribution (WV$_{pr}$) is determined for the maximum coefficient of friction ($\mu$);
wherein, for each output node (y(s)) of the Bayesian network, a likelihood probability distribution (WV$_{li,i}$) is determined from the first number of items of information on the basis of the observation of a specific output value at the current waypoint (s);
wherein, for at least some of the output nodes (y(s)), a respective a posteriori probability distribution (WV$_{po,i}$) is determined for the maximum coefficient of friction ($\mu$) from the a priori probability distribution (WV$_{pr}$) and the respective likelihood probability distribution (WV$_{li,i}$) in a correction step with the aid of Bayes' formula,
wherein the respective a posteriori probability distribution (WV$_{po,i}$) for the maximum coefficient of friction ($\mu$) is assessed,
wherein a vehicle acceleration is additionally taken into account when determining the likelihood probability distribution (WV$_{li,i}$),
**characterized in that** the respective a posteriori probability distribution (WV$_{po,i}$) is assessed, and one of the a posteriori probability distributions (WV$_{po,i}$) is selected, on the basis of an entropy.

**2.** Method according to Claim 1, in which a three-stage causal chain is formed from nodes (1, 2, 3) and edges (4, 5) of the Bayesian network, wherein

input nodes (u(s)) of the Bayesian network each represent a factor influencing the maximum coefficient of friction ($\mu$),
the output nodes (y(s)) which are each dependent on the maximum coefficient of friction ($\mu$) represent a consequence or an effect of the maximum coefficient of friction ($\mu$), and

each conditional dependence between one of the input nodes (u(s)) and the maximum coefficient of friction ($\mu$) and between the maximum coefficient of friction ($\mu$) and one of the output nodes (y(s)) is represented by one of the edges (4, 5).

3. Method according to Claim 1, in which the Bayesian network forms a multi-stage causal chain, wherein

   the input nodes (u(s)) are divided into one or more hierarchical levels, and/or
   the output nodes (y(s)) are divided into one or more hierarchical levels.

4. Method according to one of the preceding claims, in which a conditional probability is assigned to each node (1, 2, 3) of the Bayesian network.

5. Method according to one of the preceding claims, in which one or more of the following items of information are processed as the first and/or second number of items of information:

   - longitudinal and/or lateral acceleration of the vehicle; yaw rate; wheel speed(s); estimation of the coefficient of friction on the basis of the longitudinal dynamics of the vehicle;
   - vehicle speed;
   - slip;
   - estimation of the coefficient of friction on the basis of the lateral dynamics of the vehicle;
   - estimation of the coefficient of friction on the basis of a combination of the longitudinal and lateral dynamics of the vehicle;
   - driver type or driving style (classification);
   - outside temperature; rain intensity; air humidity; air pressure;
   - road topology; moisture of the road; type and condition of the road; type of intermediate medium.

6. Method according to one of the preceding claims, in which the first and/or second number of items of information is provided or determined by one or more of the following information sources:

   - ESC/brake; radar, camera, lidar, ultrasonic, infrared system; driving state observer; steering system; weather information service; precise map data (PSD), intelligent infrastructure components.

7. Method according to one of the preceding claims, in which a deliberate steering intervention and/or a braking or acceleration intervention, in particular a wheel-specific braking or acceleration intervention, is/are carried out in the case of a high entropy.

8. Method according to one of the preceding claims, in which, in order to determine the second probability distribution (WV2), one or more of the following items of information are processed as information relating to the future waypoint (s*):
   data from and/or relating to a vehicle travelling in front; data from and/or relating to a driver of a vehicle travelling in front; road topology; type of road surface; road condition; road surface; type of intermediate medium; weather data, in particular outside temperature, rain intensity, air humidity, air pressure; precise map data (PSD); data from intelligent infrastructure components.

9. Method according to one of the preceding claims, in which a convex combination is carried out in order to combine the first and second probability distributions (WV1, WV2).

10. Method according to Claim 9, in which a forecast parameter ($\alpha$), which represents a measure of the forecast by weighting the first and second probability distributions (WV1, WV2), is processed during the combination.

11. Method according to Claim 10, in which at least one further forecast parameter ($\alpha$) is processed during the combination.

12. Method according to Claim 10 or 11, in which the forecast parameter ($\alpha$) is selected on the basis of the determined entropy of a respective probability distribution and/or the information from a sensor system of the vehicle that is available for determining the maximum coefficient of friction ($\mu$).

13. Method according to one of the preceding claims, in which the future waypoint (s*) is adaptively selected.

**14.** Method according to one of the preceding claims, in which, in addition to the second probability distribution for the maximum coefficient of friction ($\mu$) at the future waypoint (s*), one or more further probability distributions for the maximum coefficient of friction ($\mu$) at one or more further forecast points ($s_i$*) are processed for the purpose of determining the resulting probability distribution for the maximum coefficient of friction ($\mu$).

**15.** Apparatus for estimating a probability distribution of a maximum coefficient of friction ($\mu$) at a current and a future waypoint (s*) of a vehicle, comprising:

a first means for generating a first probability distribution (WV1) for the maximum coefficient of friction ($\mu$) at the waypoint (s) of the vehicle by means of a Bayesian network from a first number of items of information which are or have been determined for the current waypoint (s) of the vehicle and characterize the maximum coefficient of friction ($\mu$) at the waypoint (s) of the vehicle,

a second means for estimating a second probability distribution (WV2) for the maximum coefficient of friction ($\mu$) at the future waypoint (s*) of the vehicle by means of the Bayesian network from a second number of items of information relating to the future waypoint (s*);

a third means for determining a resulting probability distribution (WV$_{res}$) from the first and second probability distributions (WV1, WV2) by means of a combination, wherein the apparatus is configured to carry out a method according to one of the preceding claims using the means.

**Revendications**

**1.** Procédé d'estimation d'une distribution de probabilités d'un coefficient de frottement ($\mu$) maximal au niveau d'un point de cheminement (s, s*) actuel et futur d'un véhicule,

avec lequel une première distribution de probabilités (WV1) pour le coefficient de frottement ($\mu$) maximal au niveau du point de cheminement actuel (s) du véhicule est déterminée à partir d'un premier nombre d'informations qui sont ou ont été déterminées pour le point de cheminement actuel (s) du véhicule et qui caractérisent le coefficient de frottement ($\mu$) maximal au niveau du point de cheminement actuel (s),

la première distribution de probabilités (WV1) étant déterminée par le biais d'un réseau bayésien,

une deuxième distribution de probabilités (WV2) pour le coefficient de frottement ($\mu$) maximal au niveau du futur point de cheminement (s*) du véhicule étant estimée à partir d'un deuxième nombre d'informations à propos du futur point de cheminement (s*) du véhicule, notamment par le biais du réseau bayésien ;

une distribution de probabilités résultante (WV$_{res}$) étant déterminée par une combinaison à partir de la première et de deuxième distribution de probabilités (WV1, WV2), une distribution de probabilités a priori (WV$_{pr}$) étant déterminée pour le coefficient de frottement ($\mu$) maximal à partir du premier nombre d'informations en vue de déterminer la première distribution de probabilités (WV1) ;

une distribution de probabilités de vraisemblance (WV$_{li,i}$) étant déterminée pour chaque nœud de sortie (y (s)) du réseau bayésien à partir du premier nombre d'informations par le biais de l'observation d'une valeur de sortie concrète au niveau du point de cheminement actuel (s) ; une distribution de probabilités a posteriori (WV$_{po,i}$) respective étant déterminée pour le coefficient de frottement ($\mu$) maximal pour au moins une partie des nœuds de sortie (y(s)) du réseau bayésien dans une étape de correction à l'aide de la formule de Bayes à partir de la distribution de probabilités a priori (WV$_{pr}$) et de la distribution de probabilités de vraisemblance (WV$_{li,i}$) respective, la distribution de probabilités a posteriori (WV$_{po,i}$) respective étant évaluée pour le coefficient de frottement ($\mu$) maximal,

une prise en compte supplémentaire d'une accélération du véhicule étant effectuée lors de la détermination de la distribution de probabilités de vraisemblance (WV$_{li,i}$), **caractérisé en ce que** l'évaluation de la distribution de probabilités a posteriori (WV$_{po,i}$) respective et une sélection de l'une des distributions de probabilités a posteriori (WV$_{po,i}$) s'effectuent par le biais d'une entropie.

**2.** Procédé selon la revendication 1, avec lequel une chaîne causale à trois étages est formée à partir des nœuds (1, 2, 3) et des arêtes (4, 5) du réseau bayésien, les nœuds d'entrée (u(s)) du réseau bayésien représentant respectivement un facteur d'influence sur le coefficient de frottement ($\mu$) maximal,

les nœuds de sortie (y(s)) qui sont respectivement dépendants du coefficient de frottement ($\mu$) maximal représentant un impact ou un effet du coefficient de frottement ($\mu$) maximal et

chaque dépendance conditionnelle entre l'un des nœuds d'entrée (u(s)) et le coefficient de frottement ($\mu$) maximal ainsi qu'entre le coefficient de frottement ($\mu$) maximal et l'un des nœuds de sortie (y(s)) étant représentée par l'une des arêtes (4, 5).

3. Procédé selon la revendication 1, avec lequel le réseau bayésien forme une chaîne causale à plusieurs étages,

les nœuds d'entrée (u(s)) étant répartis en un ou plusieurs niveaux hiérarchiques et/ou
les nœuds de sortie (y(s)) étant répartis en un ou plusieurs niveaux hiérarchiques.

4. Procédé selon l'une des revendications précédentes, avec lequel une probabilité conditionnelle est attribuée à chaque nœud (1, 2, 3) du réseau bayésien.

5. Procédé selon l'une des revendications précédentes, avec lequel une ou plusieurs des informations suivantes sont traitées en tant que premier et/ou deuxième nombre d'informations :

- accélération longitudinale et/ou transversale du véhicule ; taux de lacet ; vitesse(s) de rotation des roues ; estimation du coefficient de frottement sur la base de la dynamique longitudinale du véhicule ;
- vitesse du véhicule ;
- patinage ;
- estimation du coefficient de frottement sur la base de la dynamique transversale du véhicule ;
- estimation du coefficient de frottement sur la base d'une combinaison des dynamiques longitudinale et transversale du véhicule ;
- type de conducteur ou (classification du) style de conduite ;
- température extérieure ; intensité de la pluie ; humidité atmosphérique ; pression atmosphérique ;
- topologie de la route ; humidité de la chaussée ; nature et état de la chaussée ; nature du support intermédiaire.

6. Procédé selon l'une des revendications précédentes, avec lequel le premier et/ou le deuxième nombre d'informations est fourni ou déterminé par une ou plusieurs des sources d'informations suivantes :

- ESC/frein; système radar, de caméra, lidar, à ultrasons, à infrarouges ; observateur d'état de conduite ; direction ; service d'informations météorologiques ; données cartographiques précises (PSD) ; composants d'infrastructure intelligents.

7. Procédé selon l'une des revendications précédentes, avec lequel, en présence d'une forte entropie, une intervention ciblée dans la direction et/ou, notamment individuellement par roue, dans le freinage ou l'accélération est effectuée.

8. Procédé selon l'une des revendications précédentes, avec lequel une ou plusieurs des informations suivantes sont traitées en tant qu'informations à propos du futur point de cheminement (s*) lors de la détermination de la deuxième distribution de probabilités (WV2) :
données de et/ou à propos d'un véhicule qui précède ; données de et/ou à propos d'un conducteur d'un véhicule qui précède ; topologie de la route ; nature du revêtement de la route ; état de la route ; surface de la route ; nature du support intermédiaire ; données météorologiques, notamment température extérieure, intensité de la pluie, humidité atmosphérique, pression atmosphérique ; données cartographiques précises (PSD) ; données de composants d'infrastructure intelligents.

9. Procédé selon l'une des revendications précédentes, avec lequel une combinaison convexe est effectuée pour la combinaison de la première et de la deuxième distribution de probabilités (WV1, WV2).

10. Procédé selon la revendication 9, avec lequel un paramètre de prévision ($\alpha$) est traité lors de la combinaison, lequel représente une mesure de la prévision par une pondération de la première et de la deuxième distribution de probabilités (WV1, WV2).

11. Procédé selon la revendication 10, avec lequel au moins un paramètre de prévision ($\alpha$) supplémentaire est traité lors de la combinaison.

12. Procédé selon la revendication 10 ou 11, avec lequel le paramètre de prévision ($\alpha$) est sélectionné en fonction de l'entropie déterminée d'une distribution de probabilités respective et/ou des informations d'un système de détection du véhicule mises à disposition pour la stipulation du coefficient de frottement ($\mu$).

13. Procédé selon l'une des revendications précédentes, avec lequel le futur point de cheminement (s*) est sélectionné de manière adaptative.

**14.** Procédé selon l'une des revendications précédentes, avec lequel, en plus de la deuxième distribution de probabilités pour le coefficient de frottement ($\mu$) maximal au niveau du futur point de cheminement (s*), une ou plusieurs distributions de probabilités supplémentaires pour le coefficient de frottement ($\mu$) maximal au niveau d'un ou plusieurs points de prévision supplémentaires ($s_i$*) sont traitées en vue de stipuler la distribution de probabilités résultante pour le coefficient de frottement ($\mu$) maximal.

**15.** Dispositif d'estimation d'une distribution de probabilités d'un coefficient de frottement ($\mu$) maximal au niveau d'un point de cheminement actuel et futur (s*) d'un véhicule, comportant :

un premier moyen destiné à générer, par le biais d'un réseau bayésien, une première distribution de probabilités (WV1) pour le coefficient de frottement ($\mu$) maximal au niveau du point de cheminement (s) du véhicule à partir d'un premier nombre d'informations qui sont ou ont été déterminées pour le point de cheminement actuel (s) du véhicule et qui caractérisent le coefficient de frottement ($\mu$) maximal au niveau du point de cheminement actuel (s) du véhicule,
un deuxième moyen destiné à estimer, par le biais du réseau bayésien, une deuxième distribution de probabilités (WV2) pour le coefficient de frottement ($\mu$) maximal au niveau du futur point de cheminement (s*) du véhicule à partir d'un deuxième nombre d'informations à propos du futur point de cheminement (s*) ;
un troisième moyen destiné à déterminer une distribution de probabilités résultante (WV$_{res}$) par une combinaison à partir de la première et de la deuxième distribution de probabilités (WV1, WV2), le dispositif étant conçu pour, par le biais des moyens, mettre en œuvre un procédé selon l'une des revendications précédentes.

Fig. 1

EP 3 464 005 B1

Fig. 2

EP 3 464 005 B1

A-priori-Verteilung · · · · · Likelihood-Verteilungen · · A-posteriori-Verteilungen · · Bewertungen und Auswahl

Fig. 3

Eingang u ( s * )

- Fahrbahn-oberfläche
- Fahrbahn-zustand
- Zwischen-medium
- Rutschige Stelle
- Außen-temperatur
- Luftfeuchtig-keit / Luftdruck
- Informationen vor. Fahrzeug

Zustand $\mu$ ( s )

WV2

A-priori-Verteilung aus Informationen am Vorausschaupunkt, $P_{vF}$

WV2

A-posteriori-Verteilung aus Informationen unter dem Fahrzeug, $P_{uF}$

WV1

Berechnung einer resultierenden Wahrscheinlichkeitsverteilung

WV2

$WV_{res}$

WV1

EP 3 464 005 B1

Fig. 4

Fig. 5a

Fig. 5b

**EP 3 464 005 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100250086 A1

- DE 102007060652 A1